Europäisches Patentamt

European Patent Office

Office européen des brevets

(11) Publication number: 0 224 228
A2

## EUROPEAN PATENT APPLICATION

(21) Application number: 86116223.8

(22) Date of filing: 22.11.86

(51) Int. Cl.⁴: H04N 5/14

(30) Priority: 26.11.85 US 801717

(43) Date of publication of application:
03.06.87 Bulletin 87/23

(84) Designated Contracting States:
DE FR GB IT

(71) Applicant: HONEYWELL INC.
Honeywell Plaza
Minneapolis Minnesota 55408(US)

(72) Inventor: Crete, Paul G.
14 Reid Road
Chelmsford Massachusetts 01824(US)
Inventor: McCullough, John B.
24 Meadow Road
Marlboro Massachusetts 01752(US)

(74) Representative: Herzbach, Dieter et al
Honeywell Europe S.A. Holding KG Patent-
und Lizenzabteilung Kaiserleistrasse 55
Postfach 184
D-6050 Offenbach am Main(DE)

(54) A method and apparatus for processing raster scan display signals.

(57) What is disclosed is a method and apparatus for storing and processing analog serial scan display signals produced by an optical scanning system and detector array of an infrared imaging system to increase the vertical resolution of the infrared image produced by the optical scanning system. The analog serial scan signals output from the optical scanner are first digitized. The digitized signals for adjacent pairs of scan lines are then averaged together on a point-by-point basis to produce a digital signal for a new scan line that is displayed between the adjacent scan lines used to create the new scan line. This is repeated for all adjacent pairs of scan lines to double vertical resolution on the display.

| L1 | | L2 | | L3 | | L4 | | L5 | |
|----|----|----|----|----|----|----|----|----|----|
| | | L1-D | L1A-D | L2-D | L2P-D | L3-D | L3A-D | L4-D | L4A-D |

## FIG. 1

## A METHOD AND APPARATUS FOR PROCESSING RASTER SCAN DISPLAY SIGNALS

The present invention relates to a method for processing raster scan display signals according to the preamble of claim 1 and to an apparatus for implementing said method.

In prior art infrared imaging systems a visual output display is often accomplished with a special serial scanning arrangement providing a signal representing the image, and a cathode ray tube for converting the signal back to an infrared image. To produce a serial scan signal for providing the output display, a scanning approach that is used is a high speed rotating polygonal mirror to achieve horizontal scanning, and a galvo-controlled nodding mirror which moves at a much slower rate to achieve vertical scanning of the infrared image. Electronics operating in conjunction with the optical scanning arrangement produce an electrical signal that is applied to the cathode ray tube.

Such optical scanning and associated electronics arrangement for providing a visual output display in an infrared imaging system cannot satisfactorily be used with existing television type monitors because only a maximum horizontal efficiency of forty-two percent is theoretically achievable. This means that if the serial scan signal produced as generally described above is applied to a convential television monitor only alternating lines have video information, and the remainder of the lines are blanked. The resultant display is not totally satisfactory.

More particularly, with the prior art optical scanning arrangement described briefly above, the infrared image from the optical scanning arrangement is converted to an electrical signal. A time delay and integration technique is used in conjunction with several detector elements organized in a delineated array and scanned serially by the optical scanner to produce the electrical signal used to display the infrared image on a video output display. While this arrangement produces a higher signal-to-noise ratio and better image quality, alternate scan lines are blanked as mentioned above. The resultant video display is not totally satisfactory.

A prior art approach to overcoming the horizontal efficiency problem has been to use a detector array which contains two horizontal rows of detectors that both concurrently receive the light output from the optical scanning arrangement. The electrical signal output from one of the two horizontal rows of detectors is delayed and is then integrated with the undelayed electrical signal output from the other of the two rows of detectors to produce a composite signal that displays all scan lines on the display. With this arrangement each scan line signal is repeated once to fill in the blanked lines obtained with the prior art infrared imaging and display systems. This approach to solving the prior art problem is expensive and it creates another problem. To have a smooth and undistorted image the gain and balance of each of the detectors in the two rows of detectors must be the same, or at least very close to each other. This is a difficult task and requires additional special circuitry. In addition, the gain and balance must be set frequently to achieve and maintain satisfactory results.

It is, therefore, the object of the present invention to devise a method and apparatus which enables a visual output on a rester scan display without any blanked lines and without the necessity of frequent adjustment for achieving a satisfactory display.

This object is achieved by the characterizing features of claim 1. Further advantageous embodiments of the inventive method and of an apparatus for implementing said method may be taken from the subclaims.

The present invention functions with an optical scanner of the type described in the background of the invention but having only a single detector array, and is used to scan an infrared image. The invention operates to first digitize the analog signals output from the single detector array for each scan line of the infrared image provided by the optical scanner. Then the digitized signal for two consecutive scan lines at a time are temporarily stored. The blanked scan line between information bearing scan lines produced by the optical scanner is not stored. As each digitized scan line is received from the scanner the earliest received of the two previously stored scan lines is deleted from storage and the newly received digitized scan line is stored in its place. This way there are always two digitized scan lines in storage. Of any two digitized scan lines in storage at any point in time, the earliest received line is read out of storage, is reconverted to analog form, and is applied to a television monitor to be displayed. The two lines in storage are simultaneously read out, are averaged together on a point-by-point basis, and the average results are reconverted to analog form and used to provide a display of a scan line in lieu of the blanked scan line that occurred immediately after the earliest received of the two scan lines in storage. Then the latter received of the two scan lines in storage is read out, converted to analog form and displayed, and the next received and digitized scan line is stored in lieu of the earliest received of the two scan lines that are in storage.

This process is repeated over and over again to display the received scan lines, and to create new averaged scan lines that are displayed in between the received scan lines during the time of the blanked scan lines. This fills in the blank lines to effectively double the vertical resolution, and thereby produces a satisfactory display of the infrared image.

The present invention will be better understood upon reading the following detailed description in conjunction with the drawing in which:

FIGURE 1 shows a bar type chart that aids in understanding the time sequence of operations in the novel circuit shown in Figure 2; and

FIGURE 2 shows apparatus in detailed block diagram form for implementing the present invention.

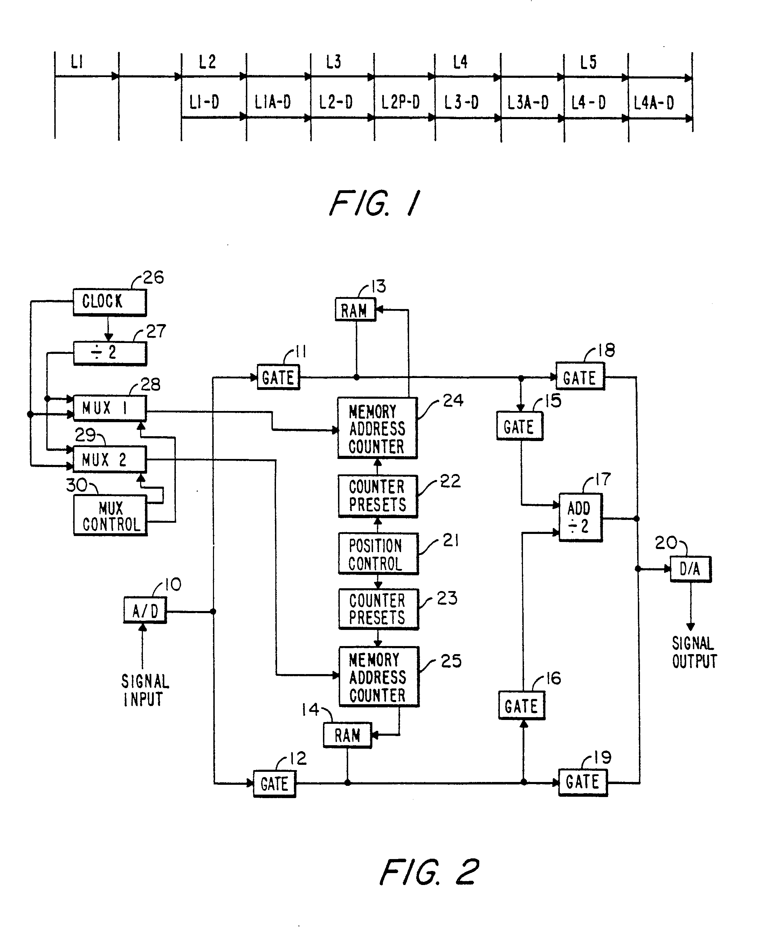

In Figure 1 is shown a bar type chart that aids in understanding the time sequence of operations and the method used in the novel circuit shown in Figure 2. Although not shown, the horizontal axis of the bar chart represents time, with time increasing to the right. Between each two vertical lines is a horizontal division representing the period of time for a single horizontal sweep scan of the optical scanner, and this is equal to the horizontal sweep time of the cathode ray tube raster scan display on which the infrared image is displayed. Advantageously, the display may be a conventional television monitor. The first or top row of arrows and the indications thereon indicate particular scan lines and the signals representing same being output from an infrared imaging optical scanner and input to the circuit shown in Figure 2. Thus, L2 represents the received and stored, in both analog and digital form, signal for scan line 2 output from the optical scanner.

Each horizontal arrow in the top row of Figure 1 and marked L1, L2, L3, et seq. also represents the time periods in which analog signals for scan line 1, scan line 2, scan line 3, et seq. are sequentially received from the optical scanner and are input to the novel circuit in Figure 2. The unmarked arrow in between the marked arrows (L1, L2, etc.) represent the alternate blanked scan lines that are inherrent in the output from optical scanners in infrared imaging systems as mentioned in the Background of the Invention. The time period of each blanked scan line is also equal to the time period of each horizontal scan line on the raster scan display.

The second or bottom row of arrows in Figure 1 indicate particular scan lines and the signals representing same being output from the circuit shown in Figure 2 in accordance with the teaching of the present invention. The position of each of the arrows in the second row and the designations thereon represent when and what analog signals for what scan lines are output from the novel circuit shown in Figure 2 to implement the present invention. For example, the arrow marked L1-D and its position in Figure 1 indicates that the analog signal for the display of scan line 1 is being output from the circuit shown in Figure 2 and displayed starting at the beginning of receipt, digitization and storage of the analog signal L2 for scan line 2. The arrow marked L2-D indicates that the analog signal for the display of scan line 2 is output and displayed starting at the beginning of receipt and storage of the analog signal L3 for scan line 3. Similarly, the arrow marked L3-D indicates that the analog signal for the display of scan line 3 is being output and displayed starting at the beginning of receipt of the analog signal L4 for scan line 4. The "D" suffix after each of these designations indicates that it is a signal output from the circuit shown in Figure 2 and used to display the scan line. From the horizontal position of each of these arrows in the second row marked L1-D, L2-D, etc. it can be seen that the received raster scan signals are stored for two horizontal sweeps or trace lines of the raster scan signal being input to the invention before they are used to display the scan lines.

In Figure 1, interspersed in the second row of arrows between those arrows marked L1-D, L2-D, etc. are arrows designated L1A-D, L2A-D, L3A-D, et seq. The "D" suffix after each of these designations indicates that it is a display signal being output from the novel circuit shown in Figure 2, and the "A" indicates that they are output display signals for the new averaged scan lines 1A, 2A, 3A, etc. that are located between the received scan lines L1, L2, L3, etc. and fill in the blanked scan lines that are discussed in the Background of the Prior Art. These new scan lines 1A, 2A, 3A, etc. are created by averaging the binary data signals L1, L2, L3, etc. representing the existing scan lines 1, 2, 3, etc. directly above and directly below a new scan line 1A, 2A, 3A, etc. That is, the signal L1A-D for the first new interspersed scan line is created by averaging the scan line signals L1 and L2 for scan lines 1 and 2; the signal L2A-D for the second new scan line is created by averaging the scan line signals L2 and L3 for scan lines 2 and 3; and so on for the other new scan lines interspersed between the other scan lines. In this specification, when the new alternate or interspersed scan lines are referred to, rather than the signals used to display same, they are designated line 1A for the new line between scan lines 1 and 2, line 2A for the new line between scan lines 2 and 3, etcetera.

Note again that arrow L1-D starts at the start of arrow L2 (start of scan line 2). The delay that this represents indicates that the input scan line signal L1 for scan line 1 is stored until the signal L2 for scan line 2 is being received. As scan line signal L2 for scan line 2 is being received, digitized and stored, the signal for the display of scan line 1 is being read out of a memory and reconverted to an analog signal L1-D for display of scan line 1 on the raster scan display.

Because the first new scan line 1A is located between scan lines 1 and 2 it requires the digitized input signals L1 and L2 for scan lines 1 and 2 to generate it. Therefore, scan line signals L1 and L2 must be received, digitized and stored, before the output signal L1A-D for the first new interspaced scan line 1A can be generated. The blanked scan line between scan lines 1 and 2 is ignored. Then, signal L1-D is read out a first time and is reconverted to analog form to display scan line 1 while signal L2 for scan line 2 is being received and stored.

During the period of the blanked scan line between received scan lines 2 and 3, signal L1 is read out of memory a second time while simultaneously signal L2 is read out of memory for the first time, and these two signals are averaged together in their binary state on a point-to-point or binary number-by-binary number basis to generate the output signal L1A-D for new synthetic scan line 1A interspaced between scan lines 1 and 2. As it is being generated the signal for line 1A is converted to analog form (L1A-D) and used to display new scan line 1A immediately following scan line 1 on the output display CRT.

Next signal L1 for scan line 1 is deleted from memory and is replaced by the signal L3 for scan line 3 just being received and digitized. While signal L3 is being digitized and stored in lieu of signal L1 in memory, signal L2 is simultaneously being read out of memory, is reconverted to analog form as signal L2-D, and is used to display scan line 2 on the CRT display.

Following the receipt of signal L3 for scan line 3 there is another blanked scan line. During the period of this blanked scan line the stored signals L2 and L3 are concurrently and sequentially read out of memory, are averaged together word by word in binary form, and the resultant signal generated thereby is then converted to analog form as signal L2A-D and used to display new scan line 2A in lieu of the blanked scan line. Again note that the display of scan lines 1, 2, etc. is taking place two horizontal scan periods after the signals L1, L2, L3, etc. for these scan lines are received, digitized and stored.

The process described in the last few paragraphs is repeated again and again to generate analog signals L3-D, L4-D, L5-D, etc. for scan lines 3, 4, 5, etc.; and signals L3A-D, L4A-D, L5A-D, etc., are generated for new scan lines 3A, 4A, 5A, etc. In a manner well known in the art, all these signals will display the infrared image on the cathode ray tube in a raster scan fashion with no blanked lines as experienced in the prior art. This displays one field on the display. The nodding mirror in the optical scanner that is used for vertical scan will have an offset voltage applied thereto to produce a small vertical offset, and as the infrared image is again repeatedly scanned horizontally, interlace scan lines are created to produce display fields and frames. This process is repeated, scan field after scan field, with interlace, to maintain the infrared image on the raster scan cathode ray tube display. With the new lines 1A, 2A, 3A, etc. generated in accordance with the teaching of the present invention the composite display is not objectionable.

With the above described method of digitally processing digitized infrared image signals in raster scan form, expensive dual row detectors are not needed, complex circuitry for balancing the gain of the output of different detectors is not needed, and frequent adjustments are avoided.

In Figure 2 is shown the circuit of the preferred embodiment of the invention. The circuit is made up of an input analog-to-digital (A/D) converter 10 for converting analog raster scan signals L1, L2, L3, etc. output from the infrared imaging system optical scanner and detector array (not shown) into binary form for processing; a digital-to-analog (D/A) converter 20 for converting processed binary signals back into analog raster scan signals L1-D, L1A-D, L2-D, L2A-D, etc. for display of the infrared image on the raster scan CRT display; an adder and divider circuit 17 which is used to average stored signals L1, L2, L3 etc. to generate new scan line signals L1A-D, L2A-D, L3A-D, etc.; random access memory (RAM) 13 and 14 for storing pairs of the digitized scan line signals L1, L2, etc. and then reading them out for processing; and a number of eight-bit gate circuits 11, 12, 15, 16, 18, and 19 which are used to gate the signals L1, L2, L3, etc. around between the other circuits within Figure 2 for processing. There are also control circuits that are not discussed here, but are described further in this specification to operate the circuits listed immediately above. The control circuit(s) may be a programmed microprocessor, or may be made up of wired logic circuits in a manner well known to those skilled in the art after having an understanding of the signal processing that is done with this invention.

Advantageously, the circuits shown in Figure 2 and the control circuit(s) for same may be placed on a single large scale integrated circuit chip (LSI). In this manner the cost of implementing the present invention may be minimized and little space is required for a single chip.

that is between scan lines 2 and 3. Eight-bit gates 15 and 16 are operated, and simultaneously the eight-bit binary numbers that make up scan line signal L2 are read out of RAM 14 and scan line signal L3 is read from RAM 13. Eight-bit word by eight-bit word the two scan line signals L2 and L3 are input to adder-divider 17 to be averaged. Adder-divider 17 adds each pair of binary numbers input thereto in parallel format for signals L2 and L3 and then shifts the resultant sum number one bit to effectively divide the sum by two as previously described. In this manner the first of each of the twelve-hundred eighty binary numbers representing scan lines 2 and 3 are averaged. This is repeated for each of the. twelve-hundred eighty binary numbers representing scan lines 2 and 3. In this manner the whole of scan lines 2 and 3 are averaged to produce new scan line 2A which is output from adder-divider 17 and applied to the input of D/A converter 20. D/A converter 20 converts the binary signal for new scan line 2A into analog signal L2A-D which is applied to the raster scan display (not shown) for the display of new scan line 2A thereon.

At the end of the blank line following signal L3, signal L4 for scan line 4 is now present at the input of A/D converter 10. Scan line 4 is digitized by converter 11, and at the same time eight-bit gate 12 is operated and RAM memory 14 is enabled to be written into. The result is that the twelve-hundred eighty binary numbers representing scan line 4 are sequentially passed through gate 12 and are stored in RAM 14 in lieu of signal L2 which was previously stored therein. Signal L2 is no longer required because it has been used to: a) generate new scan line signal L1A-D used to display new scan line 1A, b) used to display scan line 2, and c) generate new scan line signal L2A-D used to display new scan line 2A.

While signal L4 for scan line 4 is being sequentially digitized and stored in RAM 14, scan line 3 is to be displayed on the CRT display as may be seen in the circuit timing shown in Figure 1. RAM memory 13 is enabled to be read and signal L3 is read out thereof. At the same time eight-bit gate 18 is enabled and signal L3 is thereby applied to the input of D/A converter 20 to be reconverted to analog form. The analog signal L3-D output from D/A converter 20 is applied to the raster scan display (not shown) for the display of scan line 3 thereon. As mentioned previously, scan line 3 is being displayed two scan line periods after it was received, digitized and stored.

The above described operational sequence is repeated to display all of the scan lines for which an analog signal are received for one vertical trace or field of the optical scanning system and on the raster scan CRT display, and new scan lines are created by averaging to interspace the existing scan lines. In this manner there are no blanked lines and an acceptable image display of higher resolution is achieved.

After one complete field is displayed during one vertical trace of the optical scanner and on the CRT, RAMs 13 and 14 are cleared and the sequence described above in detail is repeated so that the novel circuit shown in Figure 2 operates again for the next (odd or even) interlaced scan field to complete a display frame.

The remaining circuitry in Figure 2 is control circuitry which controls the functions described hereinabove. First, clock signals from clock 26 are used to sequentially address RAM memories 13 and 14. To accomplish this the output from clock circuit 26 is gated through MUX circuits 28 and 29 to be applied to memory address counters 24 and 25 for RAMs 13 and 14 respectively. The output from counters 24 and 25 are multi-bit binary numbers in parallel format that are used to address RAMs 13 and 14 in a manner well known in the art. MUX control circuit 30 controls MUXs 28 and 29 to apply the clock signals to memory address counters 24 and 25 as just described. In a zoom operation described further in this specification MUX control 30 operates MUXs 28 and 29 to block the direct output from clock 26 being applied to address counters 24 and 25, and alternatively enables the clocking output from divide-by-two circuit 27 to be gated through MUXs 28 and 29 to address counters 24 and 25. Circuit 27 is a simple logic circuit well known in the art that takes a pulse train input and outputs another pulse train at half the frequency than that at its input.

Position control circuit 21 and counter preset circuits 22 and 23 are used to clear address counters 24 and 25 to zero, and to place initial counts in them before they start counting address pulses from clock 26 or divide-by-two circuit 27. For example, after a full display field has been read out of RAM memories 13 and 15, memory address counters 24 and 25 are reset to zero for the receipt and processing of the next field of scan lines from the optical scanner and detector array.

Because the digitized scan line signals for each scan line are read out of RAM memories 13 and 14 three times as previously described in this specification, memory address counters 24 and 25 must be repeatedly returned to the address counter for the first binary number at the beginning of each line. Address counters 24 and 25 must be reset to zero each time to accomplish this.

The infrared image may also stabilized within a servo loop since the present invention allows positional control of an image both horizontally and vertically using the techniques and circuitry taught

At the beginning of serial scanning a single display field in the infrared imaging system using the optical scanner and detector array (both not shown), the analog raster scan signal L1 for scan line 1 is present at the input of analog-to-digital - (A/D) converter 10. A/D converter 10 operates in a manner well known in the art to sample an input analog signal and convert it to a sequential string of binary numbers. In this embodiment of the invention, A/D converter 10 outputs an eight-bit binary number for each sample and is operated to sample the input analog signal at a rate yielding twelve-hundred eighty samples for each horizontal scan line. Those skilled in the art will recognize that the sampling rate of A/D converter 10 may be increased to increase horizontal resolution, and may be decreased to decrease horizontal resolution.

In operation, eight-bit gate 11 is operated, RAM memory 13 is enabled to be written into, and the twelve-hundred eighty-eight bit binary numbers representing scan line 1 are passed through gate 11 to be stored in random access memory (RAM) 13. Gate circuit 11 is then disabled along with gate 12 so that nothing is stored during the blank scan line immediately following scan line 1 as output from the optical scanner and detector array. For scan line 2 eight-bit gate 12 is operated, RAM memory 14 is enabled to be written into, and the twelve-hundred eighty-eight bit binary numbers representing scan line 2 are passed through gate 12 and are stored in RAM 14. Again gates 11 and 12 are disabled during the blank scan line following scan line 2. Gate 11 and 12 are both disabled during the period of each blank scan scan line following receipt of signals L1, L2, L3, etc. for scan lines 1, 2, 3, etc. from the detector array at the output of the optical scanner.

At the same time that scan line signal L2 for scan line 2 is being received and stored in RAM memory 14, the control circuit enables eight-bit gate 18, sequentially reads the binary numbers representing signal L1 for scan line 1 out of RAM memory 13, and signal L1 is applied to D/A converter 20 which converts the signal to analog signal L1-D which is applied to the raster scan display - (not shown) for the display of scan line 1 thereon. As mentioned previously, scan line 1 is being displayed two scan line periods after it was received, digitized and stored.

During the period of the blank scan line that follows scan line 2, input gates 11 and 12 are disabled as mentioned above, but the other circuits are operated to generate the new scan line 1A that is between scan lines 1 and 2. To do this the controller operates eight-bit gates 15 and 16, and simultaneously and sequentially reads each of the eight-bit binary numbers that make up scan line signal L1 out of RAM 13 and scan line signal L2 out of RAM 14. Eight-bit word by eight-bit word the two scan line signals L1 and L2 are input to adder-divider 17 to be averaged. Adder-divider 17 adds each pair of binary numbers input thereto in parallel format for signals L1 and L2 and then shifts the resultant sum number one bit to effectively divide the sum by two. For a brief example, in binary coded decimal (BCD) the decimal number 6 is 0110 (using only four bits) and the decimal number 8 is 1000. The average of 8 and 6 is 7. Adding 0110 and 1000 you get 1110, which when shifted one bit to the right gives 0111 which is 7 in decimal form. In this manner the first binary number of each of the twelve-hundred eighty binary numbers representing scan lines 1 and 2 are averaged. This is repeated for each of the twelve-hundred eighty-eight bit binary numbers representing scan lines 1 and 2. In this manner the whole of scan lines 1 and 2 are averaged to produce new scan line 1A which is output from adder-divider 17 and applied to the input of D/A converter 20. D/A converter 20 converts the binary signal for new scan line 1A into analog signal L1A-D which is applied to the raster scan display (not shown) for the display of new scan line 1A thereon.

At the end of the blank scan line following signal L2 being input to the circuitry in Figure 2, signal L3 for scan line 3 is present at the input of A/D converter 10. Scan line 3 is digitized by converter 10, and at the same time eight-bit gate 11 is operated and RAM memory 13 is enabled to be written into. The result is that the twelve-hundred eighty-eight bit binary numbers representing scan line 3 are sequentially passed through gate 11 and are stored in RAM 13 in lieu of signal L1 which was previously stored therein. Signal L1 is no longer required because it has been used to display scan line 1, and has been used to generate signal L1A-D for scan line 1A, so it is deleted.

While signal L3 for scan line 3 is being digitized and stored in RAM 13, it is time to display scan line 2 on the CRT display as may be seen in the circuit timing shown in Figure 1. The control circuit enables RAM memory 14 to be read and reads signal L2 out thereof. At the same time eight-bit gate 19 is enabled and signal L2 is thereby applied to the input of D/A converter 20 to be reconverted to analog form. The analog signal L2-D output from D/A converter 20 is applied to the raster scan display (not shown) for the display of scan line 2 thereon. As mentioned previously, scan line 2 is being displayed two scan line periods after it was received, digitized and stored.

During the period of the blank scan line that follows scan line 3 input gates 11 and 12 are disabled as mentioned above, and the other circuits are used to generate the new scan line 2A

herein. This is done using counts placed in counter preset circuits 22 and 23, and by using dc offset voltages applied to the nodding mirror in the optical scanner.

A zoom mode may also be implemented utilizing the invention. Divide-by-two circuit 27 is used to provide the clock pulses to memory address counters 24 and 25 to implement the zoom mode. The use of MUX control circuit 30 and MUXs 28 and 29 to accomplish this are described hereinabove. With a lower frequency clock driving address counters 24 and 25 only the first half of a scan line is read out of RAM memories 13 and 14 during the period of a scan line on the CRT display. The effect is to give a two power horizontal expansion. When it is desired to horizontally zoom some part of an image other than the left side as described above, position control circuit 21 controls counter preset circuits 22 and 23 to place an initial count in memory address counters 24 and 25. It if is desired to horizontally expand around the middle of the display (each scan line thereof), a counter preset of 320 is loaded into address counters 24 and 25. This value is chosen because there are 1280 counts across each scan line. Then with the slower clocking speed the counter progresses to the count of 960 by the end of a scan line on the display. This effectively expands each scan line to display only the middle of each scan line and thereby provides the zoom function. Of course, to have a practical zoom function, there must be vertical expansion also.

Vertical expansion of an infrared image is accomplished mechanically rather than electronically. To accomplish this two things are done. First, a preset voltage can be applied to the nodding mirror in the optical scanner which alters the starting point of the vertical travel of the nodding mirror. Secondly, the excursion limits of the mirror can be changed. If the excursion limits are decreased, the image is effectively magnified. Vertical positional control is achieved by varying the DC offset voltage to the galvo-controlled nodding mirror.

In combination, the electrical and mechanical techniques are used and varied to provide any degree of zooming for any part of the image. While horizontal zooming by a factor or two is taught above, divided-by-two circuit 27 may be replaced by a counter divided circuit having may taps that can be used to tap off many clock rates in a manner well known in the art.

Further, vertical expansion or zooming can be accomplished electronically rather than mechanically. The address counters, counter preset circuits, and input eight-bit gating circuits would be controlled to only receive and store a selected half of the horizontal scan lines within one scan field. Each of the received and stored lines L1, L2, L3, etc., and the new lines L1A, L2A, L3A, etc. interspersed therewith would then be each read out twice and output via the D/A converter 20 to the display. In this manner vertical zoom expansion is accomplished.

## Claims

1. A method for processing raster scan display signals with alternate scan lines blanked out, **characterized by** the following steps for creating a new raster scan display signal for each blanked out line from the display signals for sequential pairs of scan lines:
storing said raster scan display signals for sequential pairs of scan lines,
averaging said raster scan display. signals for said pairs of scan lines to create new scan line display signals, and
placing said new scan line display signals in said raster scan display signal between said sequential pairs of scan lines used to produce them in order to produce a composite raster scan display signal which when applied to a raster scan display provides increased vertical resolution.

2. The method according to claim 1 further **characterized by** the steps of:
removing from storage the display signal for the earliest received of a first and a second sequentially received scan lines after the display signals for the first and second stored scan lines have been averaged together, and
storing the display signal for a third scan line received after said first and second scan lines, the display signals for said second and third scan lines then being averaged together to create a new scan line display signal for the blanked out scan line between said second and said third scan lines.

3. The method according to claim 2, **characterized in that** said averaging step comprises the steps of:
summing the string of binary numbers for one scan line with the corresponding binary numbers for a sequential scan line, and
shifting the results of said summing step for each pair of binary numbers to effectively divide each summed result and thereby produce the average of each sequential pair of binary numbers that are added together.

4. The method according to claim 3, further **characterized by** the step of converting said composite display signal to analog form to be used for a presentation on said display with increased vertical resolution.

5. The method according to one of claims 1 to 4, **characterized by** the following step for expanding information displayed on a raster scan video display to provide an expansion or zoom function, wherein the information to be displayed is stored in a memory as a set of binary numbers for each scan line:

reading ones of the binary numbers in each set of binary numbers for each scan line out of said memory more than once before the next sequential binary number is read out of said memory more than once, said binary numbers read repeatedly out of said memory making up a display signal which when used to display said information provides horizontal expansion of the display information.

6. The method according to claim 5, further **characterized by** the step of:

reading each set of binary numbers for each scan line out of said memory more than once before the next set of binary numbers for the next scan line is read out of said memory more than once, said sets of binary numbers read repeatedly out of said memory making up a display signal which when used to display said information provides vertical expansion of the display information.

7. The method according to one of claims 1 to 4, **characterized by** the following steps for expanding information displayed on a raster scan video display to provide an expansion or zoom function, wherein the information to be displayed is received as raster scan display signals in analog form which are digitized as a set of binary numbers for each scan line:

averaging at least part of said sets of binary numbers for sequential pairs of scan lines to create new scan line display signals in binary form which are then placed between the binary number sets of the sequential scan lines that are used to create them to thereby create a first digitized display signal, and

repeating each of the binary numbers in each set of binary numbers for each scan line of said first digitized display signal, said repeated binary numbers making up a composite raster scan display signal which when used to present said information on said display provides horizontal expansion of the displayed information.

8. The method according to claim 7, further **characterized by** the step of:

repeating the set of binary numbers for each scan line of said first digitized display signal before the subsequent set of binary numbers in said first digitized signal are repeated, said repeated sets of binary numbers helping to make up said composite raster scan display signal to thereby also provide vertical expansion of the displayed information.

9. Apparatus for implementing the method of claim 1 or one of the following method claims, **characterized by** means (10) for digitizing said raster scan display signals to produce a string of binary numbers for each scan line of said raster scan display signals,

means (13, 14) for storing said digitized raster scan display signals for sequential pairs of scan lines,

means (17) for averaging said raster scan display signals for said sequential pairs of scan lines to create new scan line display signals, and

means (15, 16, 18, 19) for placing said new scan line display signals in said raster scan display signal between said sequential pairs of scan lines used to produce them in order to produce a composite raster scan display signal which when applied to a raster scan display provides increased vertical resolution.

10. Apparatus according to claim 9, further **characterized by** means (20) for converting said composite raster scan display signal to analog form for presentation on a raster scan display with increased vertical resolution.

11. Apparatus according to claim 10, **characterized in that** said storing means comprises two memories (13, 14), each memory for storing the raster scan display signals for one raster scan line.

| LI | | L2 | | L3 | | L4 | | L5 | |
|----|----|----|----|----|----|----|----|----|----|
| | | LI-D | LIA-D | L2-D | L2P-D | L3-D | L3A-D | L4-D | L4A-D |

## FIG. 1

## FIG. 2